Europäisches Patentamt

European Patent Office

Office européen des brevets

(11) Numéro de publication: **0 413 072 A1**

# DEMANDE DE BREVET EUROPEEN

(21) Numéro de dépôt: 89440085.2

(51) Int. Cl.5: **C04B 16/04**

(22) Date de dépôt: **18.08.89**

(43) Date de publication de la demande:
**20.02.91 Bulletin 91/08**

(84) Etats contractants désignés:
**AT BE CH DE ES FR GB GR IT LI LU NL SE**

(71) Demandeur: **PIERI S.A.**

**F-71580 Saillenard(FR)**

(72) Inventeur: **Antoine, Philippe**
**Larnand**
**F-39140 Bletterans(FR)**
Inventeur: **Vincent, Dany**

**F-71580 Sagy(FR)**
Inventeur: **Moriconi, Gilles**
**2 chemin de Pymont**
**F-39000 Lons Le Saunier(FR)**

(74) Mandataire: **Arbousse-Bastide, Jean-Claude**
**Philippe**
**CABINET ARBOUSSE BASTIDE 20, rue de**
**Copenhague**
**F-67000 Strasbourg(FR)**

(54) **Procédé de protection du béton contre les effets du gel et du dégel.**

(57) Procédé de protection du béton contre les effets du gel et du dégel.

Ce procédé consiste à incorporer au béton, au cours de sa fabrication, de la poudre de caoutchouc de granulométrie inférieure à 1 mm, à raison de 3 à 30 kg de ladite poudre par mètre cube de béton.

EP 0 413 072 A1

## PROCEDE DE PROTECTION DU BETON CONTRE LES EFFETS DU GEL ET DU DEGEL.

La présente invention a pour objet un procédé de protection du béton contre les effets du gel et du dégel.

On sait que le béton est sensible à l'action du gel et/ou du dégel, qui provoquent des phénomènes de contraction, ou inversement de dilatation, conduisant à une détérioration de ses caractéristiques mécaniques, dont le gonflement et l'effritement en surface sont les manifestations les plus spectaculaires.

Les sels de déverglaçage, généralement du chlorure de sodium ou de calcium, aggravent ces phénomènes en permettant la fusion de la glace, l'énergie nécessaire à cette fusion étant prise au milieu ambiant et entraînant une baisse de température des supports. La brutalité et l'amplitude des variations de température qu'ils provoquent accentuent ainsi les phénomènes de détérioration du béton.

Les conséquences de cette détérioration peuvent être dramatiques lorsque la perte de cohésion du béton et son effritement atteignent un point tel que la protection de ses armatures internes n'est plus assurée.

Le problème se posait donc de mettre au point un procédé qui permette de rendre le béton insensible à l'action du gel et du dégel.

Parmi les solutions proposées à ce problème, la meilleure consiste à inclure dans le béton, au cours de sa fabrication, une certaine proportion d'air sous forme de microbulles, cet air étant apporté par des tensioactifs qui produisent, sous l'effet du malaxage du béton, de très nombreuses petites bulles. Les tensioactifs utilisés dans ce type de procédé sont généralement des lignosulfonates ou de l'abiétate de sodium.

Le principe d'action de ces microbulles d'air est supposé être le suivant : les microbulles formeraient, après prise du ciment qui constitue partie du béton, des microcavités sphériques qui joueraient le rôle d'amortisseur de dilatation ou de vase d'expansion vis-à-vis des phénomènes de contractation ou de dilatation du béton provoqués par les variations de température.

Toutefois ce procédé est difficile et délicat à mettre en oeuvre : en effet la proportion optimum d'air à inclure dans le béton est habituellement de 3 à 6 %, pouvant aller jusqu'à 8 à 9 % pour des bétons renfermant un granulat de petites dimensions (diamètre inférieur à 10 mm). Une trop forte proportion d'air produit un effet contraire à celui visé, le béton trop riche en air devenant poreux, avec pour conséquence une diminution importante de sa compacité et donc de sa résistance mécanique.

La proportion optimum d'air ne peut être en outre définie qu'après essai sur chantier en conditions réelles, la température ambiante, la teneur en eau, le fuseau granulométrique, la nature du ciment, le malaxage et la méthode de compactage influant dans des proportions importantes sur le résultat obtenu.

Par ailleurs, les microbulles d'air doivent avoir un diamètre compris entre 10 et 100 microns pour être efficaces. Le respect de cette condition nécessite une étude microscopique réalisable seulement sur béton durci, c'est-à-dire sur ouvrage déjà réalisé.

La présente invention a pour but de remédier à ces divers inconvénients en proposant un procédé de protection du béton contre le gel et le dégel dont la mise en oeuvre est facile et indépendante notamment des conditions météorologiques et de la composition du béton.

La présente invention a ainsi pour objet un procédé de protection du béton contre le gel et le dégel, ce procédé consistant à incorporer au béton, au cours de sa fabrication, une certaine proportion de poudre de caoutchouc.

Les essais réalisés en vue de mettre au point l'invention ont en effet mis en évidence que les grains d'une poudre de caoutchouc ont un effet d'amortissement vis-à-vis des phénomènes de dilatation ou de contraction du béton, conférant à ce dernier une remarquable résistance mécanique au gel et au dégel.

La poudre de caoutchouc mise en oeuvre dans le procédé selon l'invention présente avantageusement une granulométrie comprise entre 0 et 1 mm, et de préférence entre 0 et 500 microns, avec une répartition d'au moins 70 % entre 50 et 250 microns.

Conformément à l'invention, la poudre de caoutchouc est mise en oeuvre à raison de 3 à 30 kg, et de préférence 5 à 20 kg, par mètre cube de béton, étant incorporée à ce dernier au cours de sa fabrication, dans un malaxeur ou une bétonnière.

La poudre de caoutchouc mise en oeuvre dans le procédé selon l'invention peut être une poudre de caoutchouc naturel ou synthétique pouvant renfermer des charges minérales ou organiques. Elle peut ainsi consister en la poudre obtenue par broyage de pneumatiques usagés, et plus spécialement, pour des raisons de pureté, de leurs chapes ou bandes de roulement, et appelée communément "poudrette de caoutchouc".

La poudre de caoutchouc peut être associée à tous les adjuvants classiques du béton, tels qu'accélérateurs de prise, retardateurs de prise, fluidifiants, plastifiants, etc..., ainsi qu'aux adjuvants spécifiques tels que fumée de silice, fibres plastiques, cendres volantes, métakaolin, pigments, etc...

Le procédé selon l'invention présente l'avantage d'être d'une mise en oeuvre facile, le dosage de la poudre de caoutchouc étant sûr, précis et constant, et l'avantage supplémentaire de n'être pas influencé par les conditions météorologiques présidant à la fabrication du béton, non plus que par la composition de ce dernier.

Le béton obtenu par le procédé selon l'invention présente en outre l'avantage, déjà exprimé, de posséder une remarquable résistance au gel et au dégel, et ce sans modification sensible de ses propriétés mécaniques. Il offre de surcroît l'avantage de ne pas présenter de toxicité.

D'autres avantages et caractéristiques de la présente invention apparaîtront à la lecture des exemples qui suivent et qui sont fournis à titre d'illustration de l'invention, vis-à-vis de laquelle ils ne présentent aucun caractère limitatif.

Exemple 1.

Cet exemple illustre les différences de résistance au gel/dégel de bétons qui renferment ou non des bulles d'air ou de la poudrette de caoutchouc, et dont les compositions sont indiquées dans le tableau ci-après, les quantités étant exprimées en kg sauf indication contraire.

| COMPOSITION | Béton 1 | Béton 2 | Béton 3 |
|---|---|---|---|
| Sable silico calcaire 0/5 | 740 | 740 | 740 |
| Sable silico calcaire 5/8 | 130 | 130 | 130 |
| Sable silico calcaire 8/12 | 370 | 370 | 370 |
| Sable silico calcaire 12/20 | 650 | 650 | 650 |
| Ciment CPA gris | 330 | 330 | 330 |
| Eau | 165 l | 165 l | 165 l |
| Entraîneur d'air | 0 | 33 g | 0 |
| Poudrette 0-500 microns | 0 | 0 | 10 |

Le test est mené sur des séries de dalles de béton après durcissement pendant 28 jours à 20° C et 50 % d'humidité relative, sur face fond de moule et sur face arrière. Toutes les faces de chaque dalle, sauf la face supérieure, sont étanchées à l'aide de mastic silicone du commerce. Un cordon périphérique de mastic silicone est disposé sur la face supérieure, formant une cuvette de rétention d'environ 0,7 mm de hauteur.

On place dans cette cuvette de rétention une solution saline de 3 % de chlorure de sodium dans de l'eau de ville et on soumet la dalle à ces cycles successifs de gel/dégel en maintenant sa température à -25° C pendant 14 heures, puis à +25° C pendant 10 heures (HR 50-60 %), et on observe l'évolution des surfaces. Les résultats sont rassemblés dans le tableau ci-après.

| | Faces avant | Faces arrière |
|---|---|---|
| Béton 1 | Effritement total à 4 cycles | Effritement total à 11 cycles |
| Béton 2 | Effritement total à 8 cycles | Peu d'effritement à 18 cycles |
| Béton 3 | Effritement total à 12 cycles | Très peu d'effritement à 18 cycles. |

Ce test met bien en évidence la résistance supérieure au gel/dégel du béton selon l'invention, comparé aux bétons courants et aux bétons renfermant des bulles d'air.

Exemple 2.

3

Cet exemple a trait aux modifications de résistance mécanique d'un béton en fonction de sa teneur en air occlus ou en poudre de caoutchouc.

On prend comme béton témoin (B.T.) le béton 1 de l'exemple 1 et on compare sa résistance à la compression avec celle de bétons de même composition renfermant de l'air occlus ou de la poudrette de caoutchouc de granulométrie 0-500 microns.

Les mesures sont effectuées après conservation de 14 jours à 20° C (HR 100 %). Les résultats obtenus sont les suivants :

| Béton témoin (B.T.)... | 100 |
|---|---|
| B.T. + 4 % air occlus... | 95,3 |
| B.T. + 6,5 % air occlus... | 83 |
| B.T. + 10 kg/m$^3$ poudrette... | 94 |
| B.T. + 20 kg/m$^3$ poudrette... | 88 |
| B.T. + 30 kg/m$^3$ poudrette... | 80. |

On constate qu'à la dose d'emploi recommandée, soit 10 kg/m$^3$ environ, la perte de résistance du béton renfermant de la poudre de caoutchouc est de 6 % seulement contre 5 à 17 % pour un air occlus de 4 à 6,5 %.

Exemple 3.

Cet exemple a trait à l'association de la poudrette de caoutchouc avec des fibres synthétiques, en l'occurrence des fibres de polypropylène commercialisées sous la dénomination "FIBERMESH" 19 mm", qui permettent de supprimer le treillis soudé antifissuration généralement mis en oeuvre dans des dallages de chaussées.

On réalise un dallage coulé en place sur fond de forme compacté avec un béton de la composition suivante :

| Porphyre 10/14 concassé... | 1200 kg |
|---|---|
| Sable silico calcaire 0/5... | 600 kg |
| Ciment CPA gris 55 R... | 330 kg |
| Eau... | 165 l |
| Poudrette... | 15 kg/m$^3$ |
| Fibres de polypropylène... | 900 g, |

l'association poudrette-fibres étant introduite dans le camion toupie lors du déversement du béton.

Le béton ainsi composé est coulé pleine masse sur 20 cm d'épaisseur, mis en place par vibration à l'aiguille puis réglé et taloché.

On constate que l'addition de poudrette et de fibres ne mofifie pas sensiblement les caractéristiques de résistance du béton, ni ses caractéristiques pratiques (maniabilité, consistance, vitesse de durcissement).

Exemple 4.

Cet exemple a trait à l'association de la poudrette de caoutchouc avec la fumée de silice, cette association étant mise en oeuvre pour réaliser des blocs de béton préfabriqués destinés à être placés en bordure d'autoroutes ou en montagne.

On réalise le béton de composition suivante :

| Sable siliceux 12/20... | 900 kg. |
|---|---|
| Sable siliceux 8/12... | 400 kg. |
| Sable siliceux 0/5... | 500 kg. |
| Ciment CPA 55 gris... | 350 kg. |
| Fluidifiant poudre... | 2 kg. |
| Eau... | 140 l. |
| Poudrette 0-500 microns... | 12 kg. |
| Fumée de silice... | 28 kg. |

Ce béton est mis en place par pervibration dans des moules et on le laisse 48 heures à 20°C avant démoulage.

Après durcissement de 28 jours à 20°C et 100% d'humidité relative, sa résistance mécanique s'avère être supérieure de 40 % à celle d'un béton ne renfermant ni fumée de silice, ni poudrette de caoutchouc, ni fluidifiant.

La poudrette de caoutchouc lui confère sa résistance au gel et le fluidifiant sa compacité, grâce à la réduction d'eau qu'il autorise.

## Revendications

1) Procédé de protection du béton contre les effets du gel et du dégel, caractérisé en ce qu'il consiste à incorporer au béton, au cours de sa fabrication, de la poudre de caoutchouc de granulométrie inférieure à 1 mm, à raison de 3 à 30 kg de ladite poudre par mètre cube de béton.

2) Procédé selon la revendication 1, caractérisé en ce que la poudre de caoutchouc mise en oeuvre est une poudre de caoutchouc naturel ou synthétique, renfermant ou non des charges minérales ou organiques.

3) Procédé selon la revendication 1 ou la revendication 2, caractérisé en ce que la poudre de caoutchouc mise en oeuvre a une granulométrie inférieure ou égale à 500 microns.

4) Procédé selon l'une quelconque des revendications précédentes, caractérisé en ce que la poudre de caoutchouc est mise en oeuvre à raison de 5 à 20 kg par $m^3$ de béton.

5) Procédé selon l'une quelconque des revendications précédentes, caractérisé en ce que la poudre de caoutchouc est associée aux additifs couramment utilisés dans les bétons.

6) Procédé selon la revendication 5, caractérisé en ce que la poudre de caoutchouc est associée à des fibres synthétiques.

7) Procédé selon la revendication 5, caractérisé en ce que la poudre de caoutchouc est associée à de la fumée de silice.

8) A titre de produit industriel nouveau, le béton obtenu selon le procédé qui fait l'objet des revendications 1 à 7.

Office européen
des brevets

**RAPPORT DE RECHERCHE EUROPEENNE**

Numero de la demande

EP  89 44 0085

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | WO-A-8 202 196  (MIETTUNEN)<br>* Revendications 1-4 * | 1-4,8 | C 04 B  16/04 |
| Y | | 5,6 | |
| Y | EP-A-0 003 469  (ROCKWOOL AB)<br>* Revendications 1-4 * | 1-6,8 | |
| A | FR-A-2 349 549  (JOHN LAING & SON)<br>* Page 1, lignes 16-35; page 2, lignes 12-19; page 3, lignes 20-37 * | 1,2,5,8 | |
| A | FR-A-2 089 970  (METALLGESELLSCHAFT)<br>* Page 1, lignes 8-14; revendications 1-5 * | 1,2 | |
| A | FR-A-2 310 983, (AKZO) | | |

|  | DOMAINES TECHNIQUES RECHERCHES (Int. Cl.5) |
|---|---|
|  | C 04 B |

Le présent rapport a été établi pour toutes les revendications

| Lieu de la recherche | Date d'achèvement de la recherche | Examinateur |
|---|---|---|
| LA HAYE | 05-04-1990 | THEODORIDOU E. |